Europäisches Patentamt

European Patent Office

Office européen des brevets

(11) Publication number: **0 280 242**

**A2**

## (12) EUROPEAN PATENT APPLICATION

(21) Application number: **88102583.7**

(51) Int. Cl.⁴: **H04N 1/18**

(22) Date of filing: **22.02.88**

(30) Priority: **23.02.87 JP 41128/87**

(43) Date of publication of application:
**31.08.88 Bulletin 88/35**

(84) Designated Contracting States:
**DE GB**

(71) Applicant: **SHARP KABUSHIKI KAISHA**
**22-22 Nagaike-cho Abeno-ku**
**Osaka 545(JP)**

(72) Inventor: **Shirakoshi, Hiroshi**
**27 Aoyama 7-chome Nara-shi**
**Nara-ken(JP)**
Inventor: **Tanaka, Hironori**
**470, Sugawara-cho Nara-shi**
**Nara-ken(JP)**
Inventor: **Kotani, Matahira**
**3-28, Senohigashi 6-chome Sangou-cho**
**Ikoma-gun Nara-ken(JP)**
Inventor: **Matsumoto, Masafumi**
**545, Koshi Asuka-mura Takaichi-gun**
**Nara-ken(JP)**

(74) Representative: **Patentanwälte TER MEER -**
**MÜLLER - STEINMEISTER**
**Mauerkircherstrasse 45**
**D-8000 München 80(DE)**

(54) **Image reading apparatus.**

(57) An optical image reading apparatus for reading image information on a document (p) by leading light reflected from the optically scanned document to a reading element (7), wherein components of an optical system (1-6) for leading the reflected light to the reading element (p) and components of a document transport system (8, 9) for conveying the document (p) are mounted on a molded member (11) having blocks for supporting the components.

Fig. 2

# IMAGE READING APPARATUS

## Background of the invention

The present invention relates to an optical image reading apparatus such as a facsimile and OCR or more specifically to an optical reading apparatus in which an optical system and a document transport system are built into a unit.

Conventionally, there is no optical reading equipment with an optical system and a document transport system built in one body to allow accurate reading of the image on a document.

## Summary of the Invention

The object of the present invention is to provide an optical image reading apparatus whose optical system and document transport system are supported on one molded member to permit accurate reading of the image on a document.

To achieve the above object, according to the present invention, an image reading apparatus has a molded member containing blocks for supporting components of an optical system which leads light reflected from a document to a reading element and blocks for supporting components of a document transport system which conveys the document.

According to the image reading apparatus of the present invention, it is possible to mount the optical system components and document transport system components on the molded member integrally formed blocks for supporting said components respectively.

## Brief Description of the Drawings

The present invention will become more fully understood from the detailed description given hereinbelow and the accompanying drawings which are given by way of illustration only, and thus are not limitative of the present invention and wherein:

Fig. 1 is a drawing showing schematic construction of an embodiment of the present invention; and

Fig. 2 is an exploded view showing each component to be supported on a molded member.

## Description of the Preferred Embodiment

An embodiment of the optical image reading apparatus of the present invention is described in detail below with reference to the attached drawings.

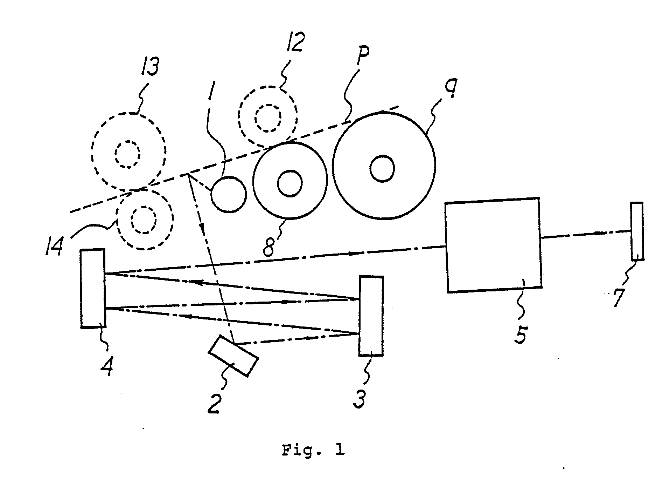

Fig. 1 shows the schematic construction of an optical system for reading the image on a document and of a document transport system. The broken lines "-------" indicate components not supported on a molded member, the chain lines " — — —— · — " indicate optical path, and the solid lines " ———— " indicate components supported on the molded member.

Referring to Fig. 1, P is document, and 1 is a lamp illuminating the document P. The numerals 2, 3 and 4 are mirrors, 5 is a lens, 7 is a CCD image sensor, 8 is a document transport roller, 9 is a document feed roller, 12 is a roller driven by the document transport roller 8, 13 is a second document transport roller, and 14 is a roller driven by the second document transport roller 13.

The image bearing side of the document P is illuminated by the lamp 1 as the document 1 is being transmitted by the document feed roller 9 and the transport roller 8.

The light from the lamp 1 is reflected by the document surface, led via the mirrors 2, 3 and 4 to the lens 5 and read by the CCD image sensor 7.

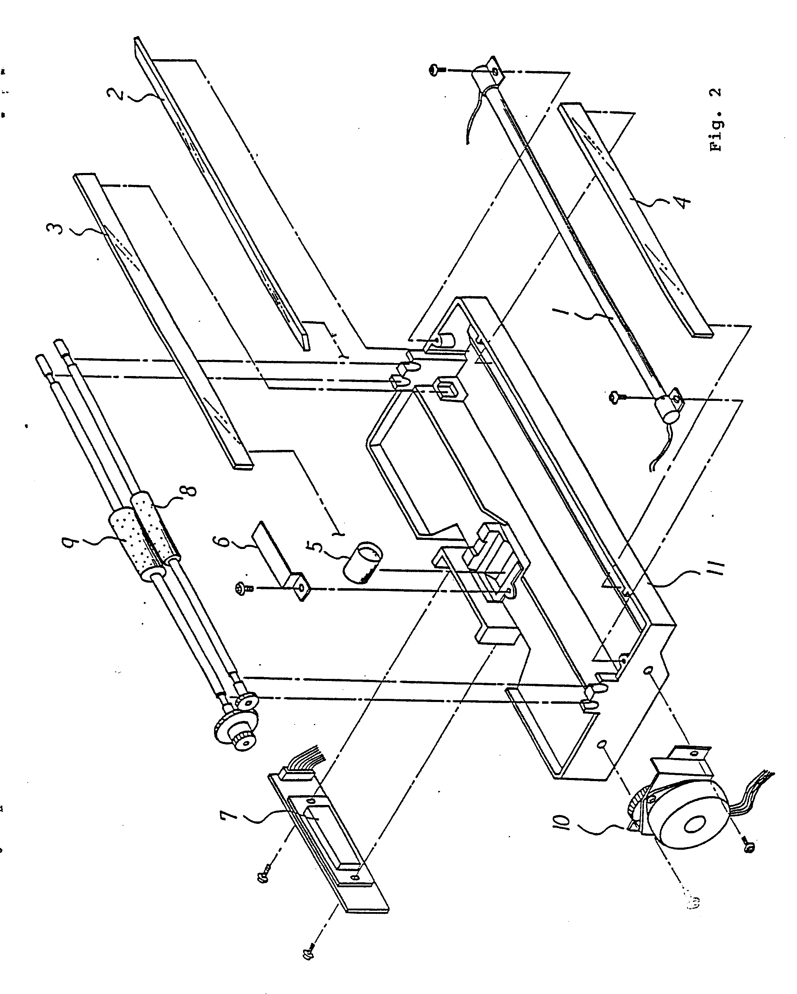

Fig. 2 is an exploded view showing the components to be supported on an integrally molded member. The same parts as those of Fig. 1 are allotted with the same reference numbers. The numeral 11 is the molded member having blocks for mounting the lamp 1, the mirrors 2, 3 and 4, the lens 5, the CCD image sensor 7, the document transport roller 8 and the document feed roller 9.

The numeral 6 is a set plate for retaining the lens 5 in the specified block of the molded member 11. 10 is a document transport system-driving motor. Means for mounting the set plate 6 and the motor 10 are also formed in the molded member 11.

As understood from the above, the image reading apparatus of the present invention comprises the optical system and the document transport system supported on one integrally molded member, allowing the optical system and transport system components to be positioned accurately. As a result, the image reading apparatus of the present invention reads the image on a document accurately and is simple in construction. The simplicity in construction helps realize a smaller and lower cost image reading apparatus and reduce the number of production processes.

While only certain embodiments of the present invention have been described, it will be apparent to those skilled in the art that various changes and modifications may be made therein without departing from the spirit and scope of the present invention as claimed.

## Claims

1. An optical image reading apparatus for reading image information on a document (p) by leading light reflected from the optically scanned document to a reading element (7), wherein components of an optical system (1-6) for leading said reflected light to said reading element (7) and components of a document transport system (8, 9) for conveying said document (p) are mounted on a molded member (11) having blocks for supporting said components.

2. The image reading apparatus of the claim 1, wherein said reading element (7) is a CCD.

Fig. 1

Fig. 2